(19) Europäisches Patentamt
European Patent Office
Office européen des brevets

(11) Numéro de publication: **0 426 578 A1**

(12) **DEMANDE DE BREVET EUROPEEN**

(21) Numéro de dépôt: **90420461.7**

(22) Date de dépôt: **25.10.90**

(51) Int. Cl.5: **C09C 1/00**, C08K 9/06, C08L 83/04

(30) Priorité: **03.11.89 FR 8914741**

(43) Date de publication de la demande: **08.05.91 Bulletin 91/19**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Joachim, Francis**
**93, Montée Bon Accueil**
**F-38200 Vienne(FR)**
Inventeur: **Peccoux, Pierre-Michel**
**71, rue Henri Gorjus**
**F-69004 Lyon(FR)**

(74) Mandataire: **Trolliet, Maurice et al**
**RHONE-POULENC CHIMIE Service Brevets Chimie Centre de Recherches des Carrières**
**B.P. 62**
**F-69192 Saint-Fons Cédex(FR)**

# (54) Oxydes cériques traités en surface et élastomères silicones, à résistance à la flamme améliorée, contenant de tels oxydes cériques.

(57) La présente invention se rapporte à des oxydes cériques comprenant à leur surface des greffons de formules $Y_3SiO$- ou $Y_3Si(OSiZ_2)_n$-O-, Y et Z représentant des groupements hydrocarbonés monovalents tels que notamment des radicaux alkyles ayant de 1 à 10 atomes de carbone.

Ces oxydes cériques peuvent être obtenus notamment par traitement à l'hexaméthyldisilazane.

Compositions silicones comprenant de tels oxydes cériques traités, permettant l'obtention d'élastomères silicones à résistance à la flamme améliorée.

EP 0 426 578 A1

# OXYDES CERIQUES TRAITES EN SURFACE ET ELASTOMERES SILICONES, A RESISTANCE A LA FLAMME AMELIOREE, CONTENANT DE TELS OXYDES CERIQUES

La présente invention concerne des oxydes cériques traités superficiellement, ainsi que notamment les compositions polyorganosiloxanes contenant de tels oxydes de cérium et conduisant à l'obtention d'élastomères silicones.

La Demanderesse a constaté dans sa demande de brevet français n° 88/08262 déposée le 15 juin 1988 (non encore publiée au dépôt de la demande présente) que la résistance à la flamme des élastomères silicones peut être améliorée par l'incorporation, dans les compositions polyorganosiloxanes, d'oxyde cérique de grande surface spécifique, c'est-à-dire de surface spécifique BET supérieure à 40 $m^2/g$, avantageusement de surface spécifique supérieure à 85 $m^2/g$.

Cependant, lors de la préparation de ces compositions polyorganosiloxanes de façon industrielle, la Demanderesse s'est aperçue que pour une répartition homogène de l'oxyde cérique dans les compositions, il était nécessaire de passer une partie de ces compositions sur des broyeurs tricylindres.

Un but de la présente invention est donc l'obtention d'oxydes cériques se dispersant aisément, de façon homogène, dans des compositions polyorganosiloxanes.

Il a donc été trouvé, et c'est ce qui fait l'objet de la présente invention, des oxydes cériques caractérisés en ce qu'ils comprennent à leur surface des greffons de formule $Y_3SiO-$ (I) ou de formule $Y_3Si-(OSiZ_2)_n-O-$ (II) dans lesquelles

* les symboles Y, identiques ou différents, représentent des groupements hydrocarbonés monovalents, tels que :

- les radicaux alkyles et halogénoalkyles, ayant de 1 à 10 atomes de carbone,
- les radicaux cycloalkyles et halogénocycloalkyles ayant de 4 à 10 atomes de carbone,
- les radicaux alcényles ayant de 2 à 4 atomes de carbone,
- les radicaux aryles et halogénoaryles mononucléaires ayant de 6 à 10 atomes de carbone ;

* les symboles Z, identiques ou différents, ont les significations données ci-avant à propos des symboles Y ; et

* n représente un nombre allant de 1 à 10..

Un autre objet de la présente invention concerne des oxydes cériques tels que ceux obtenus après avoir subi un traitement à l'hexaméthyldisilazane.

Un autre objet de la présente invention concerne l'utilisation de tels oxydes cériques, notamment dans des compositions polyorganosiloxanes vulcanisant en élastomères silicones ayant une résistance à la flamme améliorée.

Un autre objet de la présente invention concerne des compositions silicones contenant les oxydes cériques ci-avant définis, ainsi que les élastomères obtenus à partir de telles compositions.

Pour l'obtention des oxydes cériques selon la présente invention on utilise des oxydes cériques ayant une surface BET égale ou supérieure à 40 $m^2/g$, avantageusement supérieure ou égale à 85 m2/g. De préférence la surface spécifique de ces oxydes cériques est supérieure ou égale à 100 $m^2/g$ après calcination à une température comprise entre 400 et 500 °C. Cette surface spécifique est déterminée selon la méthode BRUNAUER EMMET-TELLER (BET), décrite dans le périodique "The Journal of American Society 1938, 60, 309.

Des procédés permettant l'obtention de tels oxydes cériques sont décrits notamment dans les demandes de brevets européens EP 153 227 et 153 228 de la Société Rhône-Poulenc.

Ces oxydes cériques sont soumis à l'action par exemple d'un triorganochlorosilane (i), d'un polyorganosiloxane (2i) ou d'un polyorganosilazane (3i), linéaire ou cyclique, de façon à obtenir à la surface des dits oxydes cériques des greffons de formule (I) {action des composés (i), (2i) ou (3i)} ou de formule (II) ({action du composé (2i)} dans lesquelles les symboles Y et Z, identiques ou différents, représentent par exemple :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 4 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.

L'action des triorganochlorosilanes, des polyorganosiloxanes ou des polyorganosilazanes sur les oxydes cériques de grande surface spécifique peut avoir lieu à température ambiante ou à des températures élevées, généralement inférieures à 600 °C. Le traitement pour la fixation des greffons sur les oxydes cériques peut avoir lieu en réacteur agité ou en lit fluidisé par exemple ; ce traitement peut avoir lieu à la pression atmosphérique ou à des pressions plus élevées.

A titre d'exemples de triorganochlorosilanes pouvant être utilisés, on peut citer le triméthylchlorosilane, le triéthychlorosilane, le méthyldiphénylchlorosilane, le diméthylvinylchlorosilane.

A titre d'exemples de polyorganosiloxanes pouvant être utilisés pour fixer des greffons tels que précédemment définis sur les oxydes cériques, on peut citer le décaméthyltétrasiloxane, l'hexaméthylcyclotrisiloxane, l'octaméthylcyclotétrasiloxane, le décaméthylcyclopentasiloxane, l'hexaéthylcyclotrisiloxane, l'octaéthylcyclotétrasiloxane, le triméthyltriéthylcyclotrisiloxane, le tétraméthyltétraéthylcyclotétrasiloxane, le tétraméthyltétravinylcyclotétrasiloxane et leurs mélanges.

A titre d'exemple de polysilazanes, on peut citer les hexaalcoyldisilazanes dans lesquels les groupements alcoyles, identiques ou différents, saturés ou insaturés, peuvent contenir de 1 à 10 atomes de carbone. Un hexaalcoyldisilazane intéressant est l'hexaméthyldisilazane.

Les greffons fixés à la surface des oxydes cériques selon la présente invention sont le plus généralement des radicaux triméthylsiloxy de formule $(CH_3)_3SiO$-.

Les oxydes cériques selon la présente invention comprennent de 0,1 à 5 greffons par nanomètre carré, de préférence de 0,2 à 4 greffons par nanomètre carré. Ces résultats sont déterminés par l'analyse de l'oxyde cérique en spectrométrie infrarouge et dosage du carbone et du silicium par analyse élémentaire qui mettent en évidence la présence de greffons à la surface de l'oxyde cérique, par exemple de greffons triméthylsilyles si le traitement a été fait par de l'hexaméthyldisilazane.

Les oxydes cériques selon la présente invention sont utilisés, par exemple, dans des compositions polyorganosiloxanes vulcanisables pour former des élastomères silicones ayant une bonne résistance à la flamme.

Les compositions polysiloxanes selon la présente invention, vulcanisables par exemple à la température ambiante ou à des températures inférieures à 150 °C, permettent l'obtention d'élastomères silicones compacts ou cellulaires ayant une bonne résistance à la flamme et elles sont caractérisées par le fait de comprendre de l'oxyde cérique selon la présente invention, cet oxyde cérique étant réparti de façon homogène dans ces compositions sans qu'il soit nécessaire de faire passer ces compositions (ou une partie de ces compositions) dans des broyeurs tricylindres pour une répartition homogène dudit oxyde cérique.

Les compositions selon la présente invention, permettant l'obtention d'élastomères silicones à résistance à la flamme améliorée, comprennent donc de l'oxyde cérique tel que celui défini ci-avant et elles comprennent généralement de plus du platine. Ce platine peut être sous forme :

. d'acide chloroplatinique $H_2PtCl_6$, $6H_2O$, tel que décrit dans le brevet US 2 823 218,

. d'acide chloroplatinique anhydre,

. de $PtCl_2 [P(CH_2 - CH_2 - CH_3)_3]_2$

. de complexes tels que ceux de formule $(PtCl_2$, oléfine$)_2$ et $H(PtCl_3$, oléfine) décrits dans le brevet US 3 159 601, l'oléfine du complexe représentant notamment l'éthylène, le propylène, le butylène, le cyclohexène, le styrène,

. de $(PtCl_2, C_3H_6)_2$, complexe de chlorure de platine et de cyclopropane, décrit dans le brevet américain 3 159 662,

. des produits, composés ou complexes, suivants :

$Pt(CH_3CN)_2Cl_2$, $(Pt(CH_3CN)_2(NH_3)_4]Cl_2$

$Pt(NH_3)_2Cl_2$,$K[PtCl_3(CH_2CH_2CH_2OH)]$

$PtBr_2(C_2H_4)_2$,$K[PtBr_3(C_2H_4)]$, $PtCl_2C_2H_4$

$(CH_3)_2C=CH_2.PtCl_2$,$H_2Pt(CN)_4.5H_2O$

$H[PtCl_3(CH_3CN)]$,$Pt(NH_3)_2(CNS)_2$

$[Pt(NH_3)_4].[PtCl_4]$, $PtCl_2[P(CH_2CH_3)_3]_2$,$PtCl_2.PCl_3$

$PtCl_2$,$P(OH)_3$,$PtCl_2.P(OCH_2CH_3)_3$

$PtCl_2$,$[P(OCH_2CH_3)_3]_2$, $Pt(OOCCH_2SCH_2CH_3)_2$

$Pt(CN)_3$,$(CH_3)_4Pt$,$(CH_3)_3Pt$-$Pt(CH_3)_3$

– O

$(CH_3)_3Pt(CH_3COCH=CCH_3)$

$PtCl_2CO$ et $PtBr_2CO$

Les compositions selon la présente invention concernent notamment celles du type "monocomposantes" (c'est-à-dire à un seul emballage), stables au stockage et permettant l'obtention d'élastomères durcissant en présence d'humidité, en particulier d'humidité apportée par l'air ambiant ou par de l'eau générée au sein des compositions lors de leur emploi. De telles compositions sont connues notamment par la demande de brevet européenne EP-A 235 049 (page 20, ligne 13 à page 43, ligne 10) de la société Rhône-Poulenc, citée comme référence. Ces compositions comprennent, de façon connue, en poids :

A) 100 parties d'un polymère alpha-oméga dihydroxydiorganopolysiloxane, de viscosité 500 à 1 000 000 mPa.s à 25° C, formé d'une succession de motifs diorganosiloxy de formule $R_2SiO$ dans laquelle les symboles R, identiques ou différents, représentent des radicaux hydrocarbonés ayant de 1 à 10 atomes de carbone, substitués ou non par des atomes d'halogène ou des groupes cyano.

B) 0,5 à 20 parties d'un agent réticulant choisi parmi les composés organosiliciques portant plus de deux radicaux hydrolysables liés aux atomes de silicium, par molécule.

C) 0 à 250 parties de charges minérales.

D) 0 à 20 parties d'un agent d'adhérence.

E) 0 à 2 parties d'un catalyseur de réticulation, de préférence 0,001 à 0,8 parties.

Les polymères $\alpha,\omega$-di(hydroxy)diorganopolysiloxanes cités en A de viscosité 500 à 1 000 000 mPa.s à 25° C, de préférence 1 000 à 700 000 mPa.s à 25° C, sont des polymères linéaires, constitués essentiellement de motifs diorganosiloxy de formule précitée $R_2SiO$, et bloqués à chaque extrémité de leur chaîne par un groupe hydroxyle ; toutefois, la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alcoyles ont de 2 à 3 atomes de carbone tels que les radicaux $\beta$ - cyanoéthyle et $\gamma$ -cyanopropyle.
- les radicaux méthyle, phényle, vinyle et trifluoro-3,3,3 propyle sont les radicaux préférés.

A titre d'exemples concrets de motifs représentés par la formule $R_2SiO$ on peut citer ceux de formules :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC\text{-}CH_2CH_2(CH_3)SiO$
$NC\text{-}CH(CH_3)CH_2(CH_2=CH)SiO$
$NC\text{-}CH_2CH_2CH_2(C_6H_5)SiO$

Il doit être compris que l'on peut utiliser comme polymère cité en (A) un mélange constitué de polymères $\alpha,\omega$-di(hydroxy)diorganopolysiloxanes qui diffèrent entre eux par le poids moléculaire et/ou la nature des groupements liés aux atomes de silicium.

Ces polymères $\alpha,\omega$-di(hydroxy)diorganopolysiloxanes (A) sont commercialisés ; en outre, ils peuvent être aisément fabriqués selon des techniques maintenant bien connues.

Les agents réticulants (B) sont employés à raison de 0,5 à 20 parties, de préférence 1 à 18 parties, pour 100 parties de polymères $\alpha$ - $\omega$ di(hydroxy)diorganopolysiloxanes (A). Ce sont des composés organosiliciques portant plus de deux radicaux hydrolysables, liés aux atomes de silicium, par molécule.

Comme exemples de radicaux hydrolysables convenables peuvent être cités les radicaux amino N-substitué, amido N-substitué, aminoxy N,N-disubstitué, cétiminoxy, aldiminoxy, alcoxy, alcoxyalkylène-oxy, enoxy, acyloxy.

De préférence l'agent réticulant cité en B répond à la formule

$R^z_p$ Si $X_{4-p}$

dans laquelle p égale zéro ou un, $R^z$ étant notamment choisi parmi les groupements ayant pour formule : $CH_3$, - $C_2H_5$, - $C_6H_5$, $CH_2$ = CH-, $NH_2$-$(CH_2)_r$-, r étant égal à 1, 2, 3 ou 4, $NH_2(CH_2)_2NH(CH_2)_3$ -, $NH_2$-$(CH_2)_3O(CH_3)_2C$-CH = CH -,

X représentant un groupement hydrolysable répondant à la formule :

- O - CO - $R_5$, dans laquelle $R_5$ représente un groupement alcoyle ou alcényle ayant de 2 à 20 atomes de carbone,

- O - $R_6$, dans laquelle $R_6$ représente un groupement alcoyle ayant de 1 à 4 atomes de carbone ou un groupement -$(CH_2)_n$ - O - $CH_3$ dans lequel n égal un nombre entier compris entre 1 et 4,

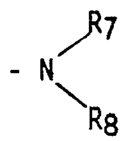

dans laquelle $R_7$ et $R_8$ représentent chacun un atome d'hydrogène ou un alcoyle inférieur ayant de 1 à 4 atomes de carbone,

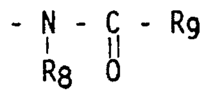

dans laquelle $R_9$ représente un groupement alcoyle ayant de 1 à 4 atomes de carbone ou un groupement phényle,

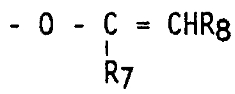

dans laquelle $R_8$ et R $_7$ ont la signification donnée ci-avant,

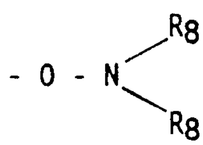

dans laquelle $R_8$ a notamment la signification donnée ci-avant,

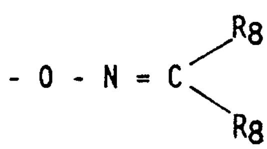

dans laquelle $R_8$ a notamment la signification donnée ci-avant,

Les charges minérales citées en C sont utilisées à raison de 0 à 250 parties, de préférence 5 à 200 parties, pour 100 parties des polymères $\alpha,\omega$-di(hydroxy)diorganopolysiloxanes (A).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les terres de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges (C) peuvent avoir été modifiées en surface par traitement avec les divers composés

organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505 ; brevet anglais 1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 5 à 70 % de silices finement divisées de surface spécifique BET supérieure à 40 $m^2/g$ et de 95 à 30 % de silices plus grossièrement divisées de surface spécifique inférieure à 30 $m^2/g$.

L'agent d'adhérence cité en D est utilisé à raison de 0 à 20 parties, de préférence de 0,2 à 15 parties, pour 100 parties du polymère alpha-oméga-dihydroxydiorganopolysiloxane cité en A.

De préférence, cet agent d'adhérence est choisi parmi les composés organosiliciques portant à la fois (1) des groupes organiques substitués par des radicaux choisis dans le groupe des radicaux amino, uréido, isocyanato, epoxy, alkényle, isocyanurates, hydantoyle, mercaptoester et (2) des groupes hydrolysables liés aux atomes de silicium.

A titre illustratif peuvent être cités les composés organosiliciques répondant aux formules ci-après (accompagnées des numéros des brevets les décrivants) :

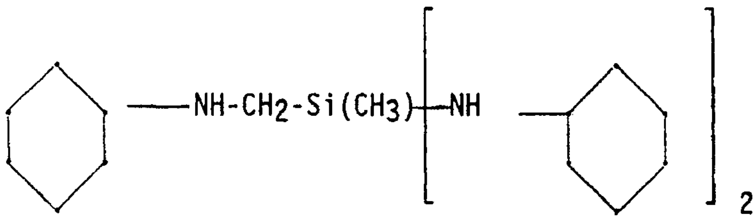

Demande européenne 74 001

- $NH_2CH_2CH_2NH-CH_2CH(CH_3)COO(CH_2)_3Si(OCH_3)_3$

Demande allemande 3 304 182

- $[CH_3)_3CO]_2Si(OCOCH_3)_2$

Brevet américain 4 356 116

- 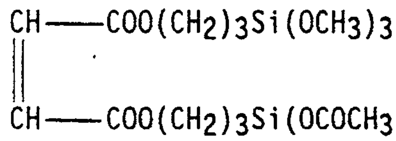

Brevet américain 4 273 698

- 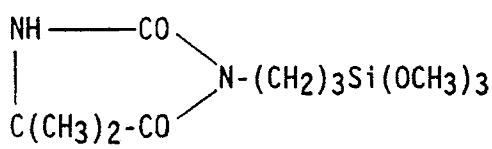

Demande européeenne 31 996

- $(C_2H_5O)_3Si(CH_2)_3NHCO-CH=CH-COOH$

Brevet américain 4 466 739

- 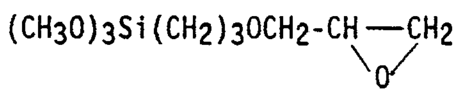

Brevet américain 4 115 356

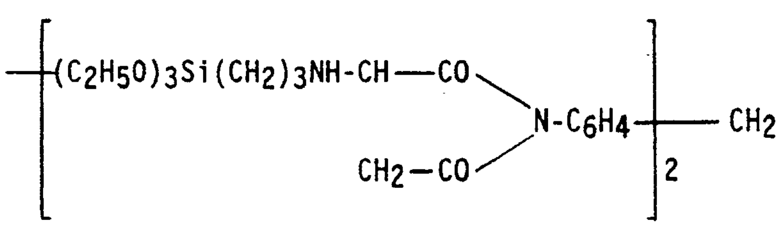

Brevet français 2 259 833

Les compositions monocomposantes décrites ci-avant comprennent avantageusement des catalyseurs cités en E pour accélérer la réaction de durcissement, ces catalyseurs étant par exemple des carboxylates d'étain, du diacétate de dibutylétain, un chélate d'étain de valence IV, d'un chélate d'étain de valence IV hexacoordiné (voir brevet français FR 2 557 582), un dérivé organique du titane ou du zirconium (FR 2 531 095), un mélange d'un bis(β-dicétonate) de diorganoétain avec un dérivé organique de l'étain de valence IV exempt de fonction β-dicétonato (FR 2 592 657).

Il doit être indiqué que les compositions monocomposantes ci-avant décrites peuvent comprendre, à la place des polymères A $\alpha,\omega$-dihydroxydiorganopolysiloxane précédemment décrits, des polymères A′ résultant de l'action de l'agent réticulant décrit en B sur les polymères A. Dans ce dernier cas l'agent réticulant B peut être supprimé de la composition ou sa quantité dans la composition peut être réduite. On ne retrouve alors que 0 à 15 parties de B dans les compositions pour 100 parties du polymère A′.

La réaction de A sur B peut avoir lieu en présence de divers catalyseurs tels qu'une amine organique (brevet américain US-A-3 542 901), un dérivé organique du titane (brevet américain US-A-4 111 890), d'un carbamate (demande de brevet européen EP-A-210 402) et une hydroxylamine M-M disubstituée (demande de brevet européen EP-A-70 786).

Les compositions "monocomposantes" selon la présente invention comprennent de l'oxyde cérique selon la présente invention. La quantité d'oxyde cérique par rapport à 100 parties en poids du polymère A ou A′ est généralement comprise entre 0,1 et 25 parties.

La quantité de platine utilisée, sous forme de platine métallique déposé sur l'oxyde cérique ou/et sous forme de composé ou de complexe de platine est généralement de 1 à 250 ppm (parties par million) par rapport au polymère A ou A′, de préférence entre 5 et 100 ppm.

Les compositions selon la présente invention concernant aussi les compositions telles que définies ci-avant pour lesquelles les X de l'agent réticulant cité en B représentent des groupes acyloxy et dont la réticulation est accélérée par addition d'hydroxyde alcalino-terreux ou de phosphate. Ces compositions sont décrites dans les demandes de brevet européen EP-A 118 325 et EP-A 117 772, cités comme référence, de la Société Rhône-Poulenc. La quantité de platine et d'oxyde cérique de ces compositions sont indiquées au paragraphe ci-avant.

Les compositions selon la présente invention concernent également les compositions dites "bi-composantes", c'est-à-dire livrées dans deux emballages distincts. Pour l'obtention de l'élastomère on mélange le contenu des deux emballages et la réticulation a lieu grâce au catalyseur. Si on mettait les composants des deux emballages dans le même emballage il serait impossible de conserver la composition résultante, même à l'abri de l'humidité atmosphérique. Les compositions "bi-composantes" sont donc conditionnées en deux emballages et seul l'un d'entre eux comporte le catalyseur de réticulation. De telles compositions "bi-composantes" de condensation décrites dans le brevet européen 2 350 049, pages 43 à 46 sont formées par mélange en poids de :

$A_1$) 100 parties d'un polymère alpha-oméga dihydroxydiorganopolysiloxane de viscosité 700 à 1 000 000 mPa.s à 25° C, semblable à celui décrit en A pour les compositions monocomposantes.

$B_1$) 1 à 20 parties, de préférence 2 à 15 parties, d'un produit choisi parmi

- (i) un silane de formule $R^{17}{}_{K}Si(OR^{16})4-k$ dans laquelle les symboles $R^{16}$, identiques ou différents, représentent des radicaux alkyles en $C_1$-$C_8$, des radicaux alcoxyalkylènes en $C_3$-$C_6$, le symbole $R^{17}$ représente un radical hydrocarboné en $C_1$-$C_{10}$, le symbole k représente zéro ou un,
- (2i) les produits d'hydrolyse partielle du silane de formule $Si(OR^{16})_4$ dans laquelle le symbole $R^{16}$ a la signification donnée sous (i).

$C_1$) : 0 à 150 parties de charges minérales.

$D_1$) : 0,01 à 10 parties, de préférence 0,1 à 8 parties d'un catalyseur,

Le polymère ($A_1$) a une viscosité de 700 à 1 000 000 de mPa.s à 25° C, de préférence 1 000 à 800 000 mPa.s à 25° C ; les radicaux organiques liés à ces atomes de silicium sont de préférence des radicaux méthyle, éthyle, propyle, vinyle, phényle. Généralement sont choisis des copolymères portant au moins 80 % de radicaux méthyle.

Les symboles $R^{16}$ représentent :

- des radicaux alkyles en $C_1$-$C_8$ tels que les radicaux méthyle, éthyle, propyle, butyle, pentyle, éthyl-2 hexyle.
- des radicaux alcoxyalkylènes en $C_3$-$C_6$ tels que ceux de formules :

$CH_3OCH_2CH_2$-

$CH_3OCH_2CH(CH_3)$-

$CH_3OCH(CH_3)CH_2$-

$CH_3OCH_2CH(CH_3)$-

Les charges $C_1$ sont utilisées à raison de 0 à 150 parties, de préférence de 5 à 120 parties, pour 100 parties de polymère $A_1$. Elles sont identiques aux charges déjà décrites en C pour la préparation des compositions monocomposantes.

Bien entendu les compositions bi-composantes, par polycondensation, décrites ci-avant, contiennent du platine et de l'oxyde cérique selon la présente invention. Les quantités de platine et d'oxyde cérique sont les mêmes vis-à-vis du polymères $A_1$ que celles mentionnées vis-à-vis du polymère A ou A′ pour les compositions monocomposantes.

Les compositions selon la présente invention concernent plus spécialement les compositions dites de polyaddition, c'est-à-dire celles résultant du mélange d'une partie A comprenant un polymère polysiloxane comportant des insaturations éthyléniques fixées à des atomes de silicium de la chaîne avec une partie B comprenant un polymère polysiloxane comportant des atomes d'hydrogène liés à des atomes de silicium de la chaîne. De telles compositions, connues en soi, comprennent ainsi généralement :

$A_2$ - un diorganopolysiloxane vinylé de viscosité comprise entre 100 et 1 000 000 mPa.s à 25 °C ayant au moins deux radicaux vinyle par molécule les autres radicaux étant généralement choisis parmi les radicaux méthyle, éthyle, phényle et 3,3,3 trifluoropropyle, au moins 60 % en nombre des radicaux organiques étant des radicaux méthyle.

$B_2$ - un organopolysiloxane présentant au moins 2, de préférence 3 groupes = SiH par molécule, choisi parmi les organopolysiloxanes ramifiés et les diorganosiloxanes linéaires.

$C_2$ - avantageusement une charge minérale telle que celles décrites ci-avant.

$D_2$ - une quantité catalytiquement efficace d'un catalyseur du platine ou du groupe du platine.

La quantité de catalyseur calculée en poids de platine métal est généralement comprise entre 1 et 250 ppm par rapport au poids de $A_2$.

Comme exemples de catalyseurs utilisables on peut citer notamment l'acide chloroplatinique $H_2PtCl_6$, les complexes platine vinylsiloxane décrits dans le brevet français FR-A 1 480 409, les brevets américains USA 3 715 334, US-A 3 775 452 et US-A 3 814 730, ainsi que les complexes du platine avec un produit organique décrits dans les brevets européens EP-A 188 978 et EP-A 190 530.

Des compositions comportant les constituants $A_2$, $B_2$, $C_2$ et $D_2$ sont bien connues et sont décrites en détail notamment dans les brevets US-A 3 697 473 et US-A 4 340 709 cités comme références.

Il est à noter que les compositions ci-avant comprenant les constituants $A_2$, $B_2$, $C_2$ et $D_2$, généralement bi-composantes (à deux emballages), peuvent éventuellement être présentées en composition monocomposante (un seul emballage) dans la mesure où elles contiennent un inhibiteur du platine, par exemple un inhibiteur tel que ceux décrits dans le brevet US-A 3 445 420 ou la demande de brevet européen A 146 422.

Les compositions selon la présente invention comprenant les constituants $A_2$, $B_2$, $C_2$, et $D_2$ décrits ci-avant, comprennent de l'oxyde cérique selon la présente invention. Généralement la quantité d'oxyde cérique utilisée est, en parties et en poids, comprise entre 0,5 et 25 pour 100 parties du diorganopolysiloxanes $A_2$.

Les compositions organopolysiloxanes selon la présente invention concernent également celles transformables en mousse. De telles compositions sont connues notamment par le brevet US A 3 070 555 (mousse obtenue par réaction de polycondensation entre un polymère polysiloxane à groupements hydroxyle et un polymère polysiloxane hydrogéné), par la demande de brevet européen 235 052 de la société Rhône-Poulenc (concernant une mousse SiH SiVi avec carbonate de calcium et acide carboxylique) et par le brevet français 2 577 233 de la Société Rhône-Poulenc. Les quantités de platine et d'oxyde cérique utilisées sont en général de 1 à 250 ppm de platine par rapport au polymère diorganosiloxane vinylé en bout de chaîne ou par rapport au polymère alpha-oméga dihydroxy diorganopolysilane, et de 0,5 à 25 parties en poids d'oxyde cérique pour 100 parties de ces mêmes polymères.

Les élastomères obtenus avec les compositions selon la présente invention peuvent être utilisés par exemple pour éviter la destruction par le feu d'organes vitaux de véhicules (automobiles, avions), pour faire des joints dans la construction, pour étanchéifier, pour faire de l'enrobage de fils électriques.

Les exemples ci-après montrent :

- dans l'exemple 1 un mode de préparation d'oxyde cérique selon la présente invention,
- dans les exemples 2 à 4 l'avantage de fixer des greffons sur un oxyde cérique pour une meilleure dispersion de ce dernier dans une composition polyorganosiloxane.

EXEMPLE 1 :

Dans un dessicateur en verre de 1 litre sont placés :

- 60 g d'oxyde cérique dont la surface spécifique est de 120 m²/g, cet oxyde étant à l'intérieur d'une nacelle en verre,
- 10 g d'hexaméthyldisilazane, ce produit étant dans une nacelle en verre.

Après un mois à température ambiante, l'oxyde est séché dans une étuve à 110 °C pendant 24 h. L'analyse du $CeO_2$ par spectrométrie infrarouge et dosage du carbone par analyse élémentaire, met en évidence la présence de greffons triméthylsilyles à la surface du solide (2,5 greffons par nm²) traduisant l'efficacité du traitement proposé.

On peut noter dans cet exemple que la Demanderesse a caractérisé les oxydes cériques selon la présente invention notamment par le fait de contenir un certain nombre de greffons $Y_3SiO$- par nanomètre carré alors que par spectrométrie infrarouge, il est impossible de déceler de tels greffons, mais seulement des greffons $Y_3Si$-. La Demanderesse pense que les greffons $Y_3Si$- décelés par spectrométrie infrarouge à la surface de l'oxyde cérique correspondent en fait à ces greffons $Y_3SiO$- fixés à la surface des dits oxydes cériques.

EXEMPLES 2 à 4 :

Des élastomères silicones de type polyaddition (SiH/SiVi) ont été préparés à partir de la composition bicomposante obtenue par mélangeage de :

- une partie A comprenant :

. 560 g d'une huile ayant une succession de groupements diméthylsiloxy dans sa chaîne bloquée à chaque extrémité par un groupement diméthylvinylsiloxy, de viscosité 600 mPa.s, le pourcentage en poids de groupements vinyle étant de 0,4 % en poids,

. 398 g de farine de quartz référence SIFRACO C 600,

. 20 g de noir de carbone référence GRAPHTOL BLN,

. 30 mg de platine catalytique sous forme de complexe organo métallique avec octanol, du type LAMOREAUX (selon USP 3 220 972), pour catalyser la réaction de polyaddition SiH/SiVi entre partie A et partie B défini ci-après,

. 22 g d'oxyde cérique dont les spécifications sont précisées ci-après.

- une partie B comprenant :

. 74,2 g d'une huile de viscosité 30 mPa s comprenant des groupements diméthylsiloxy et des groupements méthylhydrogénosiloxy dans sa chaîne, ainsi que des groupement diméthylhydrogénosiloxy en bout de chaîne, cette huile contenant 0,25 % en poids d'hydrogène,

. 502 g de farine de quartz référence SIFRACO C 600,

. 395,8 g de la même huile que celle décrite pour la partie A, ayant une viscosité de 600 mPa.s,

. 28 g d'oxyde cérique dont les spécifications sont précisées ci-après.

Pour obtenir les élastomères dont on veut vérifier la résistance à la flamme on mélange intimement ces deux parties A et B et laisse réticuler à la température ambiante.

Dans l'exemple 2, l'oxyde cérique utilisé est un oxyde cérique de 110 $m^2/g$ commercialisé par la Société RHONE-POULENC sous la référence "cerium oxide HSA", cet oxyde n'ayant subi aucun traitement à l'hexaméthyldisilazane (HMDZ) et la composition n'étant pas passée dans un mélange tricylindre.

Dans l'exemple 3, l'oxyde cérique utilisé est le même que celui de l'exemple 2, mais la composition est passée sur un mélangeur tricylindres.

Dans l'exemple 4, l'oxyde cérique utilisé est celui obtenu à l'exemple 1 après le traitement de l'HDZ, et la composition n'est pas passée dans un mélangeur tricylindre.

Le tableau ci-après indique les résultats des tests de résistance à la flamme des élastomères obtenus avec les compositions selon les exemples 2, 3 et 4, pour une moyenne de 10 essais pour chaque exemple.

Les tests de résistance à la flamme des élastomères obtenus sont effectués suivant le protocole défini par the Underwriters Laboratories (UL 94V) qui consiste à exposer une éprouvette (dont la longueur est de 127mm, la largeur de 12,7mm et dont l'épaisseur est choisie à 3mm dans les exemples 2 à 4) à deux expositions successives de 10 secondes à une flamme de 980° C, et on mesure après chaque exposition la durée d'extinction ($T_1$ puis $T_2$, en secondes).

| Example n° | Elastomères obtenus avec | Temps de combustion | |
|---|---|---|---|
| | | T1 | T2 |
| 2 | -oxyde cérique non traité par HMDZ - composition non passée sur tricylindres | 13,6 | 33,4 |
| 3 | -oxyde cérique non traité par HMDZ - composition non passée sur tricylindres | 8,6 | 15,2 |
| 4 | -oxyde cérique non traité par HMDZ - composition non passée sur tricylindres | 7,2 | 15,2 |

Par ces exemples 2 à 4, on peut bien se rendre compte que les élastomères obtenus avec des

compositions contenant de l'oxyde cérique traité par de l'HMDZ permettent de se dispenser de passer ces compositions dans un mélangeur tricylindre.

## Revendications

1. - Oxydes cériques caractérisés par le fait de comprendre à leur surface des greffons de formule $Y_3SiO$-(I) ou de formule $Y_3Si(OSiZ_2)n$-O-(II) dans lesquelles :
- les symboles Y, identiques ou différents, représentent des groupements hydrocarbonés monovalents, tels que :
- les radicaux alkyles et halogénoalkyles, ayant de 1 à 10 atomes de carbone,
- les radicaux cycloalkyles et halogénocycloalkyles ayant de 4 à atomes de carbone,
- les radicaux alcényles ayant de 2 à 4 atomes de carbone,
- les radicaux aryles et halogénoaryles mononucléaires ayant de 6 à 10 atomes de carbone ;
- les symboles Z, identiques ou différents, ont les significations données ci-avant à proposé des symboles Y ; et
- n représente un nombre allant de 1 à 10.

2. - Oxydes cériques selon la revendication 1, caractérisés en ce que les greffons sont des triméthylsiloxy.

3. - Oxydes cériques selon l'une quelconque des revendications précédentes, caractérisés en ce qu'ils comprennent de 0,1 à 5 greffons par nanomètre carré, de préférence de 0,2 à 4 greffons.

4. - Oxydes cériques, selon l'une quelconque des revendications précédentes, caractérisés en ce qu'ils sont tels que ceux obtenus après avoir subi un traitement à l'hexaméthyldisilazane.

5. - Oxydes cériques selon l'une quelconque des revendications précédentes, caractérisés en ce que leur surface spécifique est supérieure à $m^2/g$, avantageusement supérieure à 85 $m^2/g$.

6. - Utilisation des oxydes cériques selon l'une quelconque des revendications précédentes dans des compositions polyorganosiloxanes vulcanisant pour former des élastomères silicones ayant une bonne résistance à la flamme.

7. - Compositions vulcanisables à température ambiante ou à une température inférieure à 150 °C en élastomères silicones compacts ou cellulaires résistant à la flamme, caractérisées en ce qu'elles contiennent de l'oxyde cérique selon l'une quelconque des revendications 1 à 5.

8. - Elastomères à résistance à la flamme améliorée obtenus à partir des compositions selon la revendication 7.

Office européen des brevets

# RAPPORT DE RECHERCHE EUROPEENNE

Numéro de la demande

**EP 90 42 0461**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 100 075 (J. SLOCUM ASHMAN)<br>- - - - - | | C 09 C 1/00<br>C 08 K 9/06<br>C 08 L 83/04 |
| | | | **DOMAINES TECHNIQUES RECHERCHES (Int. Cl.5)** |
| | | | C 09 C<br>C 08 K<br>C 08 L |

Le présent rapport de recherche a été établi pour toutes les revendications

| Lieu de la recherche | Date d'achèvement de la recherche | Examinateur |
|---|---|---|
| La Haye | 15 janvier 91 | VAN BELLINGEN I.C.A. |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant